(19) Europäisches Patentamt

European Patent Office

Office européen des brevets

(11) **EP 0 635 339 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int. Cl.⁶: **B25J 9/10**, B65G 47/90

(21) Anmeldenummer: **94107337.1**

(22) Anmeldetag: **11.05.1994**

(54) **Handhabungsvorrichtung**

Manupulator

Manipulateur

(84) Benannte Vertragsstaaten:
**AT CH DE ES FR GB IT LI SE**

(30) Priorität: **15.07.1993 DE 4323736**

(43) Veröffentlichungstag der Anmeldung:
**25.01.1995 Patentblatt 1995/04**

(73) Patentinhaber: **FELSOMAT GmbH & Co. KG**
**D-75203 Königsbach-Stein (DE)**

(72) Erfinder:
• **Jäger, Helmut F.**
**D-75203 Königsbach-Stein (DE)**
• **Dietrich, Bernard**
**F-68170 Rixheim (FR)**

• **Peschina, Jürgen**
**D-75438 Knittlingen (DE)**

(74) Vertreter: **Gahlert, Stefan, Dr.-Ing. et al**
**Witte, Weller, Gahlert, Otten & Steil,**
**Patentanwälte,**
**Rotebühlstrasse 121**
**70178 Stuttgart (DE)**

(56) Entgegenhaltungen:
| | |
|---|---|
| EP-A- 0 076 947 | WO-A-92/20495 |
| DE-A- 2 802 738 | DE-A- 3 525 988 |
| DE-A- 3 913 655 | FR-A- 2 593 106 |
| US-A- 4 056 198 | US-A- 4 897 015 |
| US-A- 5 046 992 | |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Handhabungsvorrichtung, insbesondere Palettenumsetzvorrichtungen, mit einem Maschinengestell und mit einem in Vertikalrichtung und in Horizontalrichtung bewegbaren Ausleger, an dem ein Koppelelement zur Aufnahme einer Greifeinrichtung vorgesehen ist, wobei der Ausleger eine erste Schwinge aufweist, die am Maschinengestell gelagert und um eine horizontale Drehachse drehbar angetrieben ist, und wobei an der ersten Schwinge eine zweite Schwinge drehbar angeordnet und mit der ersten Schwinge über ein erstes Getriebe zwangsgekoppelt ist, so daß das Koppelelement bei Drehung der ersten Schwinge eine vorgegebene Ortskurve in einer Vertikalebene beschreibt.

Eine derartige Handhabungsvorrichtung ist aus der WO-A-92 20495 bekannt.

Bei der bekannten Handhabungsvorrichtung sind jedoch vorzugsweise drei Schwingen derartig getrieblich zwangsgekoppelt, daß sich insgesamt eine elliptische Ortskurve ergibt, wobei auch entartete elliptische Ortskurven in Betracht gezogen werden, die einer harmonischen rechteckförmigen Ortskurve angenähert sind. Dagegen wird bei lediglich zwei zwangsgekoppelten Schwingen, die in einer Vertikalebene beweglich sind, lediglich eine elliptische Ortskurve offenbart.

Eine ähnliche Handhabungsvorrichtung, die jedoch eine Ortskurve in einer Horizontalebene beschreibt, ist aus der DE-A-28 02 738 bekannt. Die bekannte Vorrichtung ist zur Zuführung einzelner Werkstücke oder dergleichen, beispielsweise zu einer Werkzeugmaschine, geeignet. Da das Übersetzungsverhältnis zwischen der ersten Schwinge und der zweiten Schwinge und auch die sonstigen geometrischen Parameter des zwischen der ersten und der zweiten Schwinge gebildeten Koppelgetriebes nicht im einzelnen spezifiziert sind, lassen sich mit der vorbekannten Handhabungsvorrichtung zwar verschiedene Ortskurven beschreiben, jedoch sind für viele Anwendungen weitgehend lineare Bewegungsabschnitte erforderlich, wozu die hierzu notwendige Auslegung des Koppelgetriebes der vorbeschriebenen Anordnung nicht entnehmbar ist. Für eine Anwendung beispielsweise als Palettenumsetzvorrichtung ist die bekannte Vorrichtung nicht geeignet, da hierzu eine Ortskurve mit weitgehend horizontalen und vertikalen Abschnitten durchlaufen werden muß.

Daneben ist eine weitere Handhabungsvorrichtung ähnlicher Art aus der DE-A-35 25 988 bekannt.

Die bekannte Vorrichtung ist eine Palettiermaschine, die eine Tragsäule aufweist, an der ein Hubschlitten vertikal verfahrbar ist. An dem Hubschlitten ist ein Auslegerarm angebracht, mit dem zu palettierende Güter aufgenommen und abgesetzt werden können. Der Auslegerarm wird dabei von einer Tragarmanordnung getragen, die aus zwei Tragarmen unterschiedlicher Länge besteht, dergestalt, daß bei Antrieb des einen Tragarmes das Ende des anderen Tragarmes eine annähernd ellipsenförmige Hubbewegung ausführt. Wiederum sind der Druckschrift keinerlei Hinweise entnehmbar, wie eine derartige Vorrichtung mit zwei zwangsgekoppelten Schwingen auszulegen wäre, um bei Antrieb einer Schwinge eine Ortskurve zu erzeugen, die aus weitgehend horizontalen und vertikalen Abschnitten besteht.

Der Erfindung liegt demnach die Aufgabe zugrunde, eine Handhabungsvorrichtung zu schaffen, die insbesondere als Palettenumsetzvorrichtung geeignet ist, und bei der eine einzige NC-Achse ausreicht, um Werkstücke, insbesondere Paletten, sowohl in Horizontalrichtung als auch in Vertikalrichtung in weitgehend linearer Weise verfahren zu können. Ferner soll die Vorrichtung möglichst einfach und platzsparend aufgebaut sein.

Diese Aufgabe wird bei einer Vorrichtung gemäß der eingangs genannten Art erfindungsgemäß dadurch gelöst, daß das Übersetzungsverhältnis des ersten Getriebes 1:4 beträgt und daß das Armlängenverhältnis, das durch den Quotienten aus der Armlänge der zweiten Schwinge, die durch den Achsabstand zwischen der Drehachse der zweiten Schwinge und der Mittelachse der Koppeleinrichtung gegeben ist, und aus der Armlänge der ersten Schwinge, die durch den Achsabstand zwischen den Drehachsen der ersten und der zweiten Schwinge gegeben ist, im Bereich zwischen etwa 0,09 und 0,25 liegt, so daß die Ortskurve weitgehend lineare horizontale und vertikale Abschnitte aufweist.

Erfindungsgemäß wird auf diese Weise erreicht, daß das Koppelelement bei Drehung des Auslegers eine im wesentlichen quadratische Ortskurve oder zumindest Teilbereiche davon, wie etwa eine im wesentlichen U-förmige Ortskurve oder eine im wesentlichen L-förmige Ortskurve mit weitgehend linearen horizontalen und vertikalen Abschnitten beschreibt.

Auf diese Weise ist die erfindungsgemäße Handhabungsvorrichtung insbesondere auch als Palettenumsetzvorrichtung geeignet, um Paletten von einem ersten Stapel abzunehmen, in vertikaler Richtung nach oben zu bewegen, dann über einen zweiten Abschnitt in horizontaler Richtung zu bewegen und schließlich in vertikaler Richtung wieder nach unten zu bewegen, um die Palette schließlich wieder auf einem zweiten Palettenstapel abzusetzen. Durch das gewählte Übersetzungsverhältnis des ersten Getriebes in Kombination mit dem Armlängenverhältnis wird dabei erfindungsgemäß erreicht, daß die einzelnen Teilabschnitte der Ortskurve, die das Koppelelement bei Drehung des Auslegers nacheinander beschreibt, nur eine sehr geringe Abweichung von der Linearität aufweisen, so daß die Vorrichtung zur präzisen Bewegung von zu handhabenden Teilen entlang einer U-förmigen oder L-förmigen Ortskurve geeignet ist und insbesondere auch als Palettenumsetzvorrichtung einsetzbar ist. Darüber hinaus wird durch die Zwangskopplung der ersten Schwinge mit dem Ausleger erreicht, daß lediglich eine NC-gesteuerte Achse erforderlich ist, um eine vorgegebene Ortskurve in Vertikal- und Horizontalrichtung zu durchlaufen. Somit können beliebige Punkte der vorgegebenen Bahnkurve mittels nur einer NC-Achse gesteuert angefahren werden.

Weitere Vorteile ergeben sich dadurch, daß gemäß der Erfindung ein Portal vollständig entfallen kann und ein einziger Ausleger mit zwei Schwingen ausreicht, um die notwendigen Bewegungen auszuführen. Dadurch wird die Baugröße und das Gewicht der erfindungsgemäßen Vorrichtung erheblich reduziert. Der Arbeitsraum der mit der erfindungsgemäßen Vorrichtung handhabbaren Werkstücke oder Paletten wird nicht wie bei herkömmlichen Handhabungsvorrichtungen durch Teile der Vorrichtungen selbst überragt. Dadurch wird auch ein Einsatz unter räumlich eng begrenzten Bedingungen ermöglicht.

Bei einer gedachten vollständigen Umdrehung der ersten Schwinge um 360° ist die Ortskurve an ein Quadrat angenähert. Beträgt dagegen die Drehung der ersten Schwinge noch weniger als 360° und wird danach wieder zurückgetaktet, so ergibt sich eine im wesentlichen U-förmige Ortskurve, wobei die beiden Schenkel der U-Form nach unten gerichtet sind.

Dagegen kann für einzelne Anwendungsfälle, etwa wie bei Paketieranlagen für Klein-Verpackungsmaschinen, auch ein anderer Ausschnitt aus der quadratischen Bahnkurve, eine etwa L-förmige Bahnkurve verwendet werden.

In weiter bevorzugter Ausgestaltung der Erfindung ist das Koppelelement an der zweiten Schwinge drehbar gelagert, wobei seine Mittelachse parallel zur Drehachse der ersten Schwinge angeordnet ist, und das Koppelelement ist über ein zweites Getriebe derart mit der ersten Schwinge zwangsgekoppelt, daß bei einer Drehung der ersten Schwinge seine Winkellage in bezug auf das Maschinengestell unverändert bleibt.

Auf diese Weise wird erreicht, daß das Koppelelement bei seiner Bewegung entlang der Ortskurve eine unveränderte Winkellage beibehält, so daß eine daran vorgesehene Greifeinrichtung beispielsweise horizontal ausgerichtet bleibt, insbesondere wenn Paletten umgesetzt werden sollen.

Dies läßt sich in vorteilhafter Weise dadurch erreichen, daß das Übersetzungsverhältnis des zweiten Getriebes 4:3 beträgt.

Dadurch wird die bei einem Übersetzungsverhältnis von 1:4 des ersten Getriebes erzeugte Drehung des Koppelelementes über das zweite Getriebe ausgeglichen.

In weiter bevorzugter Ausgestaltung der Erfindung wird das Armlängenverhältnis zwischen etwa 0,11 und 0,16 gewählt.

In diesem Bereich ergibt sich ein guter Kompromiß zwischen der Länge der linearen Abschnitte einerseits und der maximalen Abweichung vom linearen Bahnverlauf andererseits.

Besonders bevorzugt ist es hierbei, wenn das Armlängenverhältnis im Bereich zwischen etwa 0,12 und 0,15 liegt.

Optimale Ergebnisse ergeben sich, wenn das Armlängenverhältnis zwischen 0,125 und 0,135 liegt.

Bei einer derartigen Parameterwahl beträgt bei einer Stapelhöhe von etwa 1,2 m, d.h. bei einer nutzbaren Länge der Bahnkurve in Vertikalrichtung von 1,2 m, die maximale Abweichung von der Linearität über die gesamte Bahnkurve maximal ± 3 mm. Innerhalb dieser Toleranz wird die Linearität über die gesamte Bahnkurve beibehalten, wobei sich lediglich in den Eckbereichen der quadratischen Bahnkurve leichte Rundungen ergeben.

Bei einer Stapelhöhe von etwa 1,2 m ist es vorteilhaft, den Achsabstand für die erste Schwinge im Bereich von 930 - 1000 mm, vorzugsweise mit etwa 962 mm zu wählen, während der Achsabstand für die zweite Schwinge im Bereich zwischen etwa 122 und 132 mm, vorzugsweise mit etwa 127 mm gewählt wird.

Bei einer Stapelhöhe von maximal etwa 870 mm ist es vorteilhaft, den Achsabstand für die erste Schwinge zwischen etwa 660 und 720 mm, vorzugsweise mit etwa 692 mm zu wählen, während der Achsabstand für die zweite Schwinge im Bereich zwischen etwa 88 und 96 mm, vorzugsweise mit etwa 92 mm gewählt wird.

Ist eine größere Stapelhöhe erwünscht, so können die Achsabstände entsprechend vergrößert werden, wobei das Armlängenverhältnis etwa beibehalten wird.

Damit ergeben sich allerdings entsprechend vergrößerte Abweichungen von der Linearität der Bahnkurve. Wählt man dagegen das Armlängenverhältnis etwas niedriger, nämlich etwa im Bereich zwischen 0,11 und 0,12, so ergibt sich zwar bei 0,111 theoretisch ein optimaler Wert, für den sich eine optimale Linearität der Bahnkurve ergibt, jedoch wird diese nur über einen relativ kurzen Abschnitt der Bahnkurve beibehalten, während bei Verlassen dieses Abschnittes stärkere Abweichungen von der Linearität auftreten. Bei kleinerer Stapelhöhe kann das Armlängenverhältnis etwas kleiner, also näher am optimalen Wert von 0,111 gewählt werden.

In bevorzugter Ausgestaltung der Erfindung weist das erste Getriebe ein am Maschinengestell festgelegtes erstes Zahnrad und einen am freien Ende der ersten Schwinge drehbar gelagertes zweites Zahnrad auf, die durch einen Zahnriemen oder weitere Zahnräder gekoppelt sind.

Auf diese Weise kann die getriebliche Zwangskopplung zwischen der ersten Schwinge und der zweiten Schwinge auf besonders einfache Weise erreicht werden.

Sofern zusätzlich durch die Drehbewegung der ersten Schwinge verursachte Änderung der Winkellage des Koppelelementes ausgeglichen werden soll, um die Winkellage des Koppelelementes in Bezug auf das Maschinengestell während der Bewegung der Schwingen beizubehalten, so ist in vorteilhafter Weiterbildung der Erfindung ein zweites Getriebe vorgesehen, das ein mit der ersten Schwinge starr verbundenes drittes Zahnrad aufweist, das mit einem vierten, mit dem Koppelelement starr verbundenen Zahnrad über einen Zahnriemen, ein fünftes Zahnrad oder weitere Zahnräder gekoppelt ist.

Auf diese Weise wird die notwendige Ausgleichsbewegung zur Beibehaltung der Winkellage des Koppelelementes mit besonders einfachen Mitteln erreicht.

In weiter bevorzugter Ausgestaltung der Erfindung kann die Handhabungsvorrichtung als Palettiervorrichtung genutzt werden und benötigt dann lediglich eine NC-Achse, welche die Drehachse der ersten Schwinge ist.

Weitere Merkmale und Vorteile der Erfindung ergeben sich aus der nachfolgenden Beschreibung eines bevorzugten Ausführungsbeispieles der Erfindung unter Bezugnahme auf die Zeichnung.

Es zeigen:

Fig. 1 eine Prinzipskizze einer erfindungsgemäßen Vorrichtung zur Verdeutlichung des Bewegungsablaufes;

Fig. 2 eine vereinfachte schematische Aufsicht der Vorrichtung gemäß Fig. 1 nach Drehung des Auslegers in die entgegengesetzte Endstellung;

Fig. 3 eine vereinfachte Seitenansicht der erfindungsgemäßen Vorrichtung in gegenüber Fig. 1 vergrößerter Darstellung;

Fig. 4 eine vereinfachte Vorderansicht des Auslegers mit den zwei Schwingen der Vorrichtung gemäß Fig. 3, wobei der Übersichtlichkeit halber auf die Darstellung der übrigen Elemente der Vorrichtung verzichtet wurde;

Fig. 5 einen vergrößerten Schnitt durch das freie Ende der ersten Schwinge gemäß den Fig. 3 und 4 mit der daran vorgesehenen zweiten Schwinge und

Fig. 6 ein kinematisches Ersatzsystem der erfindungsgemäßen Vorrichtung zur Erläuterung der Kinematik.

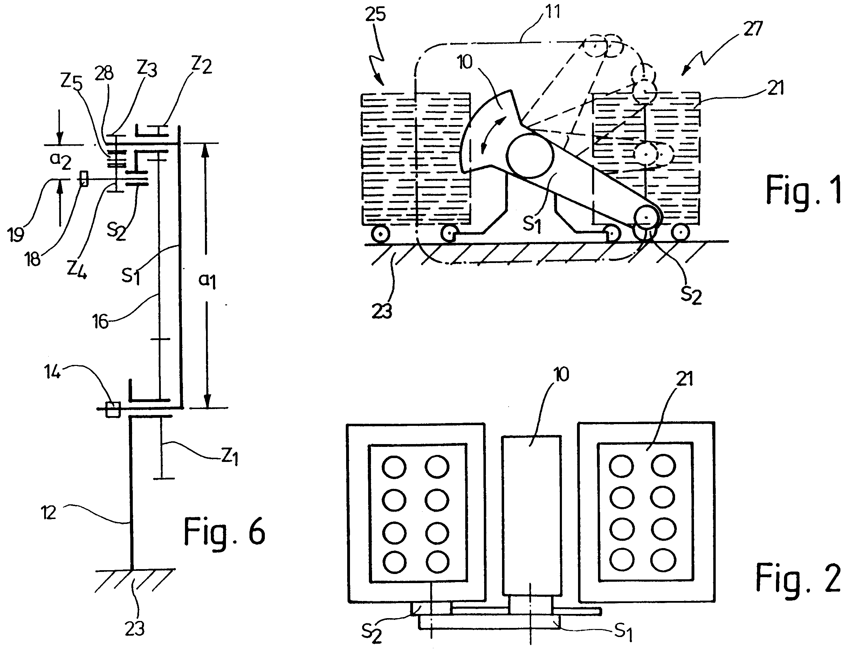

In den Fig. 1 und 2 ist eine erfindungsgemäße Handhabungsvorrichtung am Beispiel einer Palettenumsetzvorrichtung schematisch dargestellt und insgesamt mit der Ziffer 10 bezeichnet.

Die Vorrichtung 10 steht auf einem Fundament 23 und dient zum Umsetzen von Paletten, welche schematisch durch die Ziff. 21 angedeutet sind und zwischen zwei benachbarten Stapeln 25 bzw. 27 umgesetzt werden. So kann beispielsweise der Stapel 25 einen Vorrat an unbearbeiteten Werkstücken enthalten, wovon jeweils eine Palette auf den Stapel 27 aufgesetzt werden soll, von dem aus ein Ladeportal die Beschickung einer Werkzeugmaschine übernimmt. Die Handhabungsvorrichtung 10 weist einen ersten Ausleger $S_1$ auf, an dessen freiem Ende ein zweiter Ausleger $S_2$

drehbar angeordnet ist. Die Ausleger $S_1$, $S_2$ sind derart über ein Getriebe in noch nachfolgend dargestellter Weise zwangsgekoppelt, daß eine Greifeinrichtung, welche am Ende der zweiten Schwinge $S_2$ vorgesehen ist, bei einer gedachten Drehung der ersten Schwinge $S_1$ um 360° eine im wesentlichen quadratische Bahnkurve durchläuft, welche schematisch durch eine strichpunktierte Linie 11 angedeutet ist.

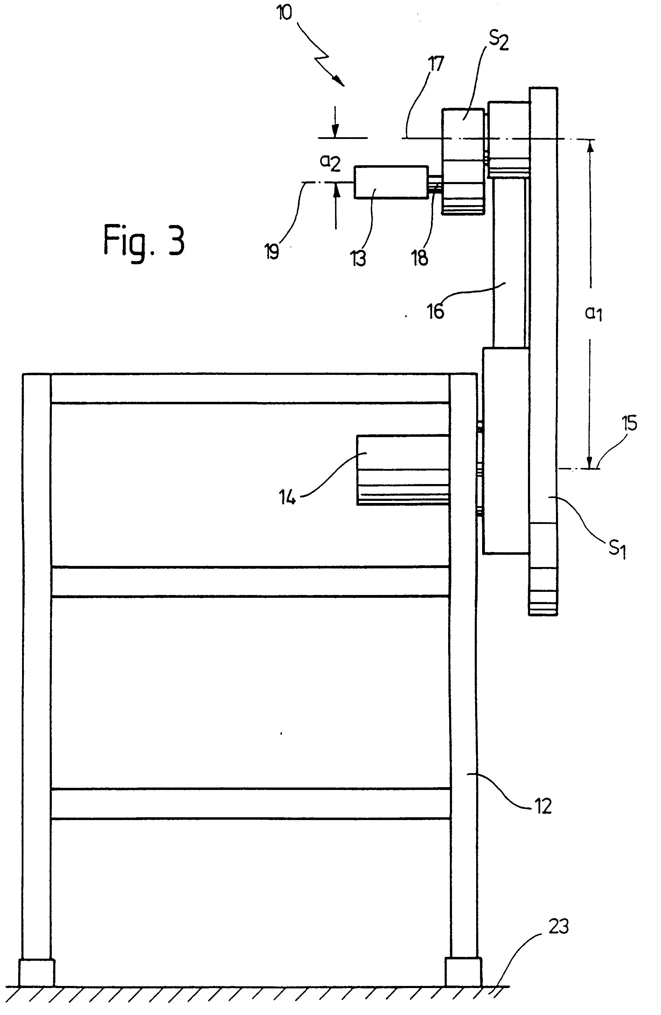

Gemäß Fig. 3 weist die Handhabungsvorrichtung 10 ein Maschinengestell 12 auf, an dem die erste Schwinge $S_1$ um eine horizontale Drehachse 15 drehbar gelagert ist. Zum Antrieb dient eine Antriebseinheit 14, deren Abtriebswelle mit der ersten Schwinge $S_1$ verbunden ist, so daß diese durch den Drehantrieb 14 um die Drehachse 15 gesteuert drehbar ist.

Am freien Ende der ersten Schwinge $S_1$ ist die zweite Schwinge $S_2$ auf einer zweiten Drehachse 17 drehbar gelagert, welche parallel zur ersten Drehachse 15 ist. Am freien Ende der zweiten Schwinge $S_2$ ist ein Koppelelement 18, welches als aus der zweiten Schwinge $S_2$ hervorstehender Wellenstumpf ausgebildet ist, gleichfalls drehbar gelagert. Das Koppelelement 18 trägt eine Greifeinrichtung, welche in Fig. 3 nur schematisch angedeutet und insgesamt mit der Ziff. 13 bezeichnet ist.

Die erste Schwinge $S_1$ ist mit der zweiten Schwinge $S_2$ über ein Zahnriemengetriebe zwangsgekoppelt, wovon in Fig. 3 lediglich der Zahnriemen dargestellt ist. Über ein zweites Getriebe, welches in Fig. 3 gleichfalls nicht ersichtlich ist, ist das Koppelelement 18 mit der ersten Schwinge $S_1$ zwangsgekoppelt.

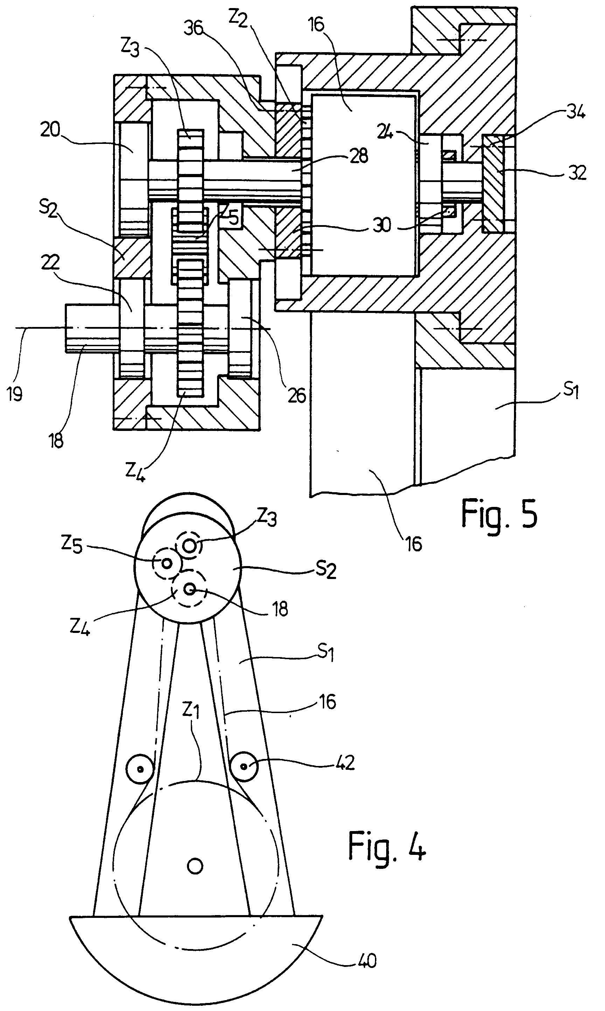

Das erste Getriebe weist ein erstes Zahnrad $Z_1$ auf, das am Maschinengestell 12 ortsfest festgelegt ist (vgl. Fig. 4). Dagegen ist das zweite Zahnrad $Z_2$ des ersten Getriebes im freien Ende der ersten Schwinge $S_1$ drehbar gelagert (Fig. 5). Ein Zahnriemen 16 ist über die beiden Zahnräder $Z_1$, $Z_2$ geführt und mittels zweier seitlicher Umlenkrollen 42 gehalten.

Wird demnach die erste Schwinge $S_1$ mittels des Drehantriebes 14 gedreht, so wälzt sich der Zahnriemen 16 auf dem feststehenden Zahnrad $Z_1$ ab und versetzt das zweite Zahnrad $Z_2$ in Drehung.

Um die Anordnung der Schwinge $S_1$, $S_2$ mit den zugehörigen Getrieben bezüglich der Drehachse 15 gewichtsmäßig auszutarieren, ist an dem dem zweiten Zahnrad $Z_2$ gegenüberliegenden Ende der ersten Schwinge ein Ausgleichsgewicht 40 vorgesehen.

Die erste Schwinge $S_1$ und die zweite Schwinge $S_2$ sind durch eine Welle 28 verbunden, die in der zweiten Schwinge $S_2$ mittels eines Lagers 20 drehbar gehalten ist und die mit ihrem anderen Ende in der ersten Schwinge $S_1$ mittels eines Flansches 32 und Verschraubungen 34 drehfest festgelegt ist.

Das zweite Zahnrad $Z_2$ ist mittels eines Flansches 30, der von der Welle 28 durchsetzt ist, und mittels eines Lagers 24 drehbar in der ersten Schwinge $S_1$ gelagert. Das zweite Zahnrad $Z_2$ ist über den Flansch 30 mittels Verschraubungen 36 starr mit der zweiten Schwinge $S_2$ verbunden.

Dreht sich somit infolge einer Drehung der ersten Schwinge $S_1$ das zweite Zahnrad $Z_2$, so wird damit gleichzeitig die zweite Schwinge $S_2$ gegenüber der ersten Schwinge $S_1$ verdreht.

In der zweiten Schwinge $S_2$ ist ferner das Koppelelement 18, welches als Wellenstumpf ausgebildet ist, parallel zur Welle 28 angeordnet und mittels zweier Lager 22, 26 drehbar gelagert. Auf der Welle 28 ist ein drittes Zahnrad $Z_3$ drehfest festgelegt. Gleichfalls ist auf dem Koppelelement 18 ein viertes Zahnrad $Z_4$ drehfest gehalten. Das dritte Zahnrad $Z_3$ und das vierte Zahnrad $Z_4$ sind über ein dazwischen angeordnetes fünftes Zahnrad $Z_5$ miteinander gekoppelt, welches mit beiden Zahnrädern $Z_3$, $Z_4$ kämmt.

Es versteht sich, daß die Zahnräder $Z_3$, $Z_4$ statt durch ein weiteres Zahnrad auch wie beim ersten Getriebe durch einen Zahnriemen gekoppelt sein könnten.

Das Übersetzungsverhältnis $i_1$ des ersten Getriebes ist durch das Verhältnis der Zähnezahlen des ersten Zahnrades $Z_1$ und des zweiten Zahnrades $Z_2$ gegeben:

$$i_1 = z_2 : z_1 = 1{:}4.$$

Das Übersetzungsverhältnis $i_2$ des zweiten Getriebes ist durch das Verhältnis der Zähnezahlen des vierten Zahnrades und des dritten Zahnrades gegeben:

$$i_2 = z_4 : z_3 = 4{:}3.$$

Im dargestellten Beispiel trägt die Armlänge $a_1$ der ersten Schwinge $S_1$, welche durch den Abstand der Drehachsen 15, 17 festgelegt ist, etwa 692 mm. Die Armlänge $a_2$ der zweiten Schwinge $S_2$, die durch den Abstand der Achsen 17, 19 gegeben ist, beträgt etwa 92 mm. Eine derartige Dimensionierung ist optimal für eine Stapelhöhe von etwa 870 mm.

Somit ergibt sich ein Armlängenverhältnis k, welches durch den Quotienten aus $a_2$ und $a_1$ gegeben ist, von:

$$k = a_2 : a_1 = 91 : 691 = 0{,}132.$$

Die Bedeutung dieser Auslegungsparameter für die Bewegungskinematik der erfindungsgemäßen Handhabungsvorrichtung 10 wird nachfolgend anhand des kinematischen Ersatzsystems gemäß Fig. 6 erläutert.

Das Maschinengestell 12 ist auf dem Fundament 23 ortsfest festgelegt. Auf dem Maschinengestell 12 ist die erste Schwinge $S_1$ drehbar gelagert, welche vom Abtriebsflansch des Drehantriebes 14 angetrieben ist. Die zweite Schwinge $S_2$ ist auf dem freien Ende der ersten Schwinge $S_1$ drehbar gelagert. Das erste Zahnrad $Z_1$ ist ortsfest auf dem Maschinengestell 12 festgelegt und mit dem zweiten Zahnrad $Z_2$, das auf der ersten Schwinge drehbar gelagert ist, über den Zahnriemen 16 verbunden.

Das zweite Zahnrad $Z_2$ steht in direkter Verbindung mit der zweiten Schwinge $S_2$ und treibt so die Schwinge $S_2$ an, wenn die erste Schwinge $S_1$ gedreht wird.

Auf der ersten Schwinge $S_1$ ist die Welle 28 starr festgelegt, welche mit dem Zahnrad $Z_3$ drehfest verbunden ist. Das Zahnrad $Z_3$ ist mit dem vierten Zahnrad $Z_4$, welches auf dem als drehbaren Wellenstumpf ausgebildeten Koppelelement 18 drehfest festgelegt ist, über das fünfte Zahnrad $Z_5$ gekoppelt.

Wird die erste Schwinge $S_1$ mit der Winkelgeschwindigkeit $\omega_1$ gedreht, bewegt sich die Mittelachse 19 des Koppelelementes 18 mit der Winkelgeschwindigkeit $\omega_2$, welche durch das Übersetzungsverhältnis $i_1$ gegeben ist, also $\omega_2 = 4\,\omega_1$ in die entgegengesetzte Richtung.

Um die Winkellage des Koppelelementes 18 in Bezug auf das Fundament 23 bzw. das Maschinengestell 12 konstant zu halten, muß die durch die beiden überlagerten Drehbewegungen verursachte Drehung des Koppelelementes 18 ausgeglichen werden, wozu das Übersetzungsverhältnis $i_2$ mit 4:3 gewählt wird.

Das gezeigte Ausführungsbeispiel, das in den Fig. 3 bis 5 gezeigte Ausführungsbeispiel ist als Palettenumsetzvorrichtung ausgeführt, welche bis zu einer Stapelhöhe von etwa 0,87 m eingesetzt werden kann.

Das Armlängenverhältnis k wurde mit k = 0,132 festgelegt, da sich hierbei einerseits eine gute Linearität der Bahnkurve des Koppelelementes ergibt und andererseits im wesentlichen nur in den äußersten Eckbereichen eine Abrundung der Bahnkurve auftritt, wie dies in Fig. 1 mit der strichpunktierten Linie 11 angedeutet ist.

Bei der gewählten Auslegung bleibt die Linearität über einen Bereich von etwa 0,75 m mit hoher Genauigkeit erhalten. Erst in den Eckbereichen, d.h. beim Übergang der Bahnkurve von der horizontalen Verfahrweise in die vertikale Verfahrweise und umgekehrt wird auf den letzten 5 cm vor dem Übergang eine größere Toleranz erreicht, da die Bahnkurve in diesem Bereich einen nach innen abgerundeten Verlauf nimmt. Da die Schwinge $S_1$ nicht vollständig um 360° verschwenkt wird, sondern lediglich abwechselnd zwischen den beiden Stapeln 25, 27 hin- und hertaktet, beträgt der Verschwenkwinkel nur etwa 270° und die von dem Koppelelement 18 durchlaufende Bahnkurve hat keinen annähernd quadratischen Verlauf, sondern entspricht einem U, dessen beide Schenkel nach unten weisen.

Erfindungsgemäß wurde erkannt, daß das Armlängenverhältnis vorzugsweise im Bereich zwischen 0,09 und 0,2 variiert werden kann, wobei sich jedoch ein besserer Kompromiß zwischen Linearität der Bahnkurve und Beibehaltung der Linearität auch in den Eckbereichen jedoch im Bereich zwischen 0,11 und 0,16 ergibt.

Noch weiter bevorzugt ist der Bereich zwischen 0,12 und 0,15, während sich für die meisten Anwendungsfälle insbesondere im Bereich zwischen 0,125 und 0,135 optimale Ergebnisse zeigen.

Im gewählten Beispiel wurde ein Armlängenverhältnis von etwa 0,132 gewählt, wobei Armlängen von 692 mm und 92 mm verwendet wurden, um eine Stapelhöhe von etwa 0,87 m zu ermöglichen.

Soll eine größere Stapelhöhe, beispielsweise etwa 1,50 m erreicht werden, so kann das Armlängenverhältnis beibehalten werden, lediglich die Armlängen sind entsprechend zu vergrößern. Dabei steigen natürlich auch in entsprechender Weise die Abweichungen von der Linearität der Bahnkurve. Wird lediglich eine kleinere Stapelhöhe benötigt, beispielsweise von nur 60 cm, falls die erfindungsgemäße Vorrichtung für andere Aufgaben wie etwa für Paketieranlagen von Klein-Verpackungsmaschinen eingesetzt werden soll, so kann das Armlängenverhältnis etwas kleiner gewählt werden, etwa im Bereich zwischen 0,12 und 0,13, da sich so eine noch bessere Linearität und nur geringe Abweichungen in den Eckbereichen der Bahnkurve ergeben.

Die erfindungsgemäße Vorrichtung läßt sich besonders vorteilhaft nicht nur als Palettenumsetzer zur Beschickung von Werkzeugmaschinen verwenden. Gleichermaßen vorteilhaft läßt sich eine solche Vorrichtung auch bei Kleinanlagen verwenden, etwa bei kompakten Paketieranlagen für Klein-Verpackungsmaschinen. Als Bahnkurven können hierbei beliebige Ausschnitte aus der quadratischen Form gewählt werden, so daß sich neben U-förmigen Bahnkurven auch z. B. L-förmige Bahnkurven verwirklichen lassen.

**Patentansprüche**

1. Handhabungsvorrichtung, insbesondere Palettenumsetzvorrichtung, mit einem Maschinengestell (12) und mit einem in Vertikalrichtung und in Horizontalrichtung bewegbaren Ausleger, an dem ein Koppelelement (18) zur Aufnahme einer Greifeinrichtung (13) vorgesehen ist, wobei der Ausleger eine erste Schwinge ($S_1$) aufweist, die am Maschinengestell (12) gelagert und um eine horizontale Drehachse (15) drehbar angetrieben ist, und wobei an der ersten Schwinge ($S_1$) eine zweite Schwinge ($S_2$) drehbar angeordnet und mit der ersten Schwinge ($S_1$) über ein erstes Getriebe ($Z_1$, $Z_2$, 16) zwangsgekoppelt ist, so daß das Koppelelement (18) bei Drehung der ersten Schwinge ($S_1$) eine vorgegebene Ortskurve (11) in einer Vertikalebene beschreibt, dadurch gekennzeichnet, daß das Übersetzungsverhältnis ($i_1$) des ersten Getriebes ($Z_1$, $Z_2$, 16) 1:4 beträgt, und daß das Armlängenverhältnis (k), welches durch den Quotienten aus der Armlänge ($a_2$) der zweiten Schwinge ($S_2$), welche durch den Achsabstand zwischen der Drehachse (17) der zweiten Schwinge ($S_2$) und der Mittelachse (19) der Koppeleinrichtung (18) gegeben ist, und aus der Armlänge ($a_1$) der ersten Schwinge ($S_1$), welche durch den Achsabstand zwischen den Drehachsen (15, 17) der ersten und der zweiten Schwinge ($S_1$, $S_2$) gegeben ist, im Bereich zwischen etwa 0,09 und 0,25 liegt:

$$0,09 \leq k = a_2/a_1 \leq 0,25,$$

so daß die Ortskurve weitgehend lineare horizontale und vertikale Abschnitte aufweist.

2. vorrichtung nach Anspruch 1, dadurch gekennzeichnet, daß die beiden Schwingen ($S_1$, $S_2$) derart zwangsgekoppelt sind, daß das Koppelelement (18) bei Drehung der ersten Schwinge ($S_1$) eine im wesentlichen U-förmige oder L-förmige Ortskurve in einer vertikalen Ebene beschreibt.

3. Vorrichtung nach Anspruch 2, dadurch gekennzeichnet, daß das Koppelelement (18) an der zweiten Schwinge ($S_2$) drehbar gelagert ist, wobei seine Mittelachse (13) parallel zur Drehachse (15) der ersten Schwinge ($S_1$) angeordnet ist, und daß das Koppelelement (18) über ein zweites Getriebe ($Z_3$, $Z_4$, $Z_5$) derart mit der ersten Schwinge ($S_1$) zwangsgekoppelt ist, daß bei einer Drehung der ersten Schwinge ($S_1$) seine Winkellage in Bezug auf das Maschinengestell (12) unverändert bleibt.

4. Vorrichtung nach Anspruch 3, dadurch gekennzeichnet, daß Übersetzungsverhältnis ($i_2$) des zweiten Getriebes ($Z_3$, $Z_4$, $Z_5$) 4:3 beträgt.

5. Vorrichtung nach einem der vorhergehenden Ansprüche, dadurch gekennzeichnet, daß das Armlängenverhältnis (k) zwischen etwa 0,11 und 0,16 liegt.

6. Vorrichtung nach Anspruch 5, dadurch gekennzeichnet, daß das Armlängenverhältnis zwischen etwa 0,12 und 0,15 liegt.

7. Vorrichtung nach Anspruch 6, dadurch gekennzeichnet, daß das Armlängenverhältnis zwischen etwa 0,125 und 0,135 liegt.

8. Vorrichtung Anspruch 6, dadurch gekennzeichnet, daß die Armlänge ($a_1$) der ersten Schwinge etwa zwischen 660 mm und 720 mm liegt, während die Armlänge ($a_2$) der zweiten Schwinge zwischen etwa 88 mm und 95 mm liegt.

9. Vorrichtung nach Anspruch 6, dadurch gekennzeichnet, daß die Armlänge ($a_1$) der ersten Schwinge etwa zwischen 930 mm und 1000 mm liegt, während die Armlänge ($a_2$) der zweiten Schwinge zwischen etwa 122 mm und 132 mm liegt.

10. Vorrichtung nach einem oder mehreren der vorhergehenden Ansprüche, dadurch gekennzeichnet, daß das erste Getriebe ein am Maschinengestell (12) festgelegtes erstes Zahnrad ($Z_1$) und ein am freien Ende der ersten Schwinge ($S_1$) drehbar gelagertes zweites Zahnrad ($Z_2$) aufweist, die durch einen Zahnriemen (16) oder weitere Zahnräder gekoppelt sind.

11. Vorrichtung nach einem oder mehreren der Ansprüche 3 bis 10, dadurch gekennzeichnet, daß das zweite Getriebe ein mit der ersten Schwinge ($S_1$) starr verbundenes drittes Zahnrad ($Z_3$) aufweist, das mit einem vierten, mit dem Koppelelement (18) starr verbundenen Zahnrad ($Z_4$) über einen Zahnriemen, ein fünftes Zahnrad ($Z_5$) oder weitere Zahnräder gekoppelt ist.

12. Vorrichtung nach einem oder mehreren der vorhergehenden Ansprüche, dadurch gekennzeichnet, daß lediglich die Drehachse (15) der ersten Schwinge ($S_1$) als numerisch gesteuerte Achse (NC-Achse) ausgebildet ist.

## Claims

1. Handling apparatus, in particular pallet moving apparatus, with a machine frame (12) and with an extension arm, movable in the vertical direction and in the horizontal direction, on which is provided a coupling element (18) for receiving a gripping device (13), wherein the extension arm has a first rocker ($S_1$) that is mounted on the machine frame (12) and is driven rotatably about a horizontal rotation axis (15); and a second rocker ($S_2$) is arranged rotatably on the first rocker ($S_1$) and is positively coupled to the first rocker ($S_1$) via a first linkage ($Z_1$, $Z_2$, 16) in such a way that when the first rocker ($S_1$) rotates, the coupling element (18) describes a locus curve (11) in a vertical plane, characterized in that the transmittion ratio ($i_1$) of the first linkage ($Z_1$, $Z_2$, 16) is 1:4, and in that the arm length ratio (k) defined by the quotient of the arm length of the second rocker ($a_2$) - which is defined by the axial spacing between the rotation axis (17) of the second rocker ($S_2$) and the center axis (19) of the coupling device (18) - and the arm length ($a_1$) of the first rocker ($S_1$) - which is defined by the axial spacing between the rotation axes (15, 17) of the first and second rockers ($S_1$, $S_2$) - lies in the range between approximately 0.09 and 0.25:

$$0.09 \leq k = a_2/a_1 \leq 0.25$$

so that the locus curve comprises considerably linear horizontal and vertical portions.

2. Apparatus according to Claim 1, characterized in that the two rockers ($S_1$, $S_2$) are positively coupled in such a way that when the first rocker ($S_1$) rotates, the coupling element (18) describes a substantially U-shaped or L-shaped locus curve in a vertical plane.

3. Apparatus according to Claim 2, characterized in that the coupling element (18) is rotatably mounted on the second rocker ($S_2$), its center axis (13) being arranged parallel to the rotation axis (15) of the first rocker ($S_1$); and in that the coupling element (18) is positively coupled to the first rocker ($S_1$) via a second linkage ($Z_3$, $Z_4$, $Z_5$) in such a way that as the first rocker ($S_1$) rotates, its angular position with reference to the machine frame (12) remains unchanged.

4. Apparatus according to Claim 3, characterized in that the transmission ratio (12) of the second linkage ($Z_3$, $Z_4$, $Z_5$) is 4:3.

5. Apparatus according to any of the preceding Claims, characterized in that the arm length ratio (k) lies between approximately 0.11 and 0.16.

6. Apparatus according to Claim 5, characterized in that the arm length ratio lies between approximately 0.12 and 0.15.

7. Apparatus according to Claim 6, characterized in that the arm length ratio lies between approximately 0.125 and 0.135.

8. Apparatus according to Claim 6, characterized in that the arm length ($a_1$) of the first rocker lies approximately between 660 and 720 mm, while the arm length ($a_2$) of the second rocker lies between approximately 88 and 95 mm.

9. Apparatus according to Claim 6, characterized in that the arm length ($a_1$) of the first rocker lies approximately between 930 and 1000 mm, while the arm length ($a_2$) of the second rocker lies between approximately 122 and 132 mm.

10. Apparatus according to one or more of the foregoing Claims, characterized in that the first linkage has a first gear ($Z_1$) fastened to the machine frame (12), and a second gear ($Z_2$) mounted rotatably at the free end of the first rocker ($S_1$), which are coupled by means of a toothed belt (16) or further gears.

11. Apparatus according to one or more of Claims 3 to 10, characterized in that the second linkage has a third gear ($Z_3$), rigidly joined to the first rocker ($S_1$), that is coupled by means of a toothed belt, a fifth gear ($Z_5$), or further gears to a fourth gear ($Z_4$) that is rigidly joined to the coupling element (18).

12. Apparatus according to one or more of the foregoing Claims, characterized in that only the rotation axis (15) of the first rocker ($S_1$) is configured as a numerically controlled (NC) axis.

## Revendications

1. Dispositif de manutention, en particulier dispositif servant à déplacer des palettes, comportant un bâti de machine (12) et comportant un bras pouvant se déplacer dans la direction verticale et dans la direction horizontale, sur lequel est prévu un élément de couplage (18) destiné à recevoir un dispositif de préhension (13), le bras présentant une première bielle ($S_1$), qui est montée sur le bâti de la machine (12) et est entraînée en rotation autour d'un axe de rotation (15) horizontal, et une deuxième bielle ($S_2$) étant montée tournante sur la première bielle ($S_1$), et se trouvant en accouplement forcé, par l'intermédiaire d'un premier engrenage ($Z_1$, $Z_2$, 16), avec la première bielle ($S_1$), de telle sorte que l'élément de couplage (18), lorsque la première bielle ($S_1$) tourne, décrit une trajectoire (11) prédéterminée dans un plan vertical, caractérisé en ce que le rapport de démultiplication ($i_1$) du premier engrenage ($Z_1$, $Z_2$, 16) est de 1 : 4 et en ce que le rapport (k) entre les longueurs de bras, qui correspond au quotient entre la longueur de bras ($a_2$) de la deuxième bielle ($S_2$), qui est donnée par l'écart entre l'axe de rotation (17) de la deuxième bielle ($S_2$) et l'axe central (19) du dispositif de couplage (18), et la longueur de bras ($a_1$) de la première bielle ($S_1$), qui est donnée par l'écart entre les axes de rotation (15, 17) de la première et de la deuxième bielle ($S_1$, $S_2$), se situe entre 0,09 et 0,25 :

$$0,09 \leq k = a_2/a_1 \leq 0,25$$

de telle sorte que la trajectoire présente des tronçons linéaires principalement horizontaux et verticaux.

2. Dispositif selon la revendication 1, caractérisé en ce que les deux bielles ($S_1$, $S_2$) se trouvent en accouplement forcé de telle sorte que l'élément de couplage (18), lorsque la première bielle ($S_1$) tourne, décrit une trajectoire sensiblement en forme de U ou de L, dans un plan vertical.

3. Dispositif selon la revendication 2, caractérisé en ce que l'élément de couplage (18) est monté tournant sur la deuxième bielle ($S_2$), son axe central (13) étant parallèle à l'axe de rotation (15) de la première bielle ($S_1$), et en ce que l'élément de couplage (18) se trouve en accouplement forcé avec la première bielle ($S_1$), par l'intermédiaire d'un deuxième engrenage ($Z_3$, $Z_4$, $Z_5$), de telle sorte que, lorsque la première bielle ($S_1$) tourne, sa position angulaire par rapport au bâti de la machine (12) ne soit pas modifiée.

4. Dispositif selon la revendication 3, caractérisé en ce que le rapport de démultiplication ($i_2$) du deuxième engrenage ($Z_3$, $Z_4$, $Z_5$) est de 4 : 3.

5. Dispositif selon l'une des revendications précédentes, caractérisé en ce que le rapport (k) entre les longueurs de bras se situe entre environ 0,11 et 0,16.

6. Dispositif selon la revendication 5, caractérisé en ce que le rapport entre les longueurs de bras se situe entre environ 0,12 et 0,15.

7. Dispositif selon la revendication 6, caractérisé en ce que le rapport entre les longueurs de bras se situe entre environ 0,125 et 0,135.

8. Dispositif selon la revendication 6, caractérisé en ce que la longueur de bras ($a_1$) de la première bielle se situe entre environ 660 mm et 720 mm, tandis que la longueur de bras ($a_2$) de la deuxième bielle se situe entre environ 88 mm et 95 mm.

9. Dispositif selon la revendication 6, caractérisé en ce que la longueur de bras ($a_1$) de la première bielle se situe entre environ 930 mm et 1000 mm, tandis que la longueur de bras ($a_2$) de la deuxième bielle se situe entre environ 122 mm et 132 mm.

10. Dispositif selon l'une ou plusieurs des revendications précédentes, caractérisé en ce que le premier engrenage possède une première roue dentée ($Z_1$) fixée sur le bâti de la machine (12), et une deuxième roue dentée ($Z_2$), montée tournante sur l'extrémité libre de la première bielle ($S_1$), qui est accouplée avec une courroie crantée (16) ou d'autres roues dentées.

11. Dispositif selon l'une ou plusieurs des revendications 3 à 10, caractérisé en ce que le deuxième engrenage présente une troisième roue dentée ($Z_3$), reliée de façon rigide avec la première bielle ($S_1$), qui est accouplée avec une quatrième roue dentée ($Z_4$), reliée rigidement avec l'élément de couplage (18) par l'intermédiaire d'une courroie crantée, d'une cinquième roue dentée ($Z_5$) ou d'autres roues dentées.

12. Dispositif selon l'une ou plusieurs des revendications précédentes, caractérisé en ce que seul l'axe de rotation (15) de la première bielle ($S_1$) est conformé en axe à commande numérique.

Fig. 6

Fig. 1

Fig. 2

EP 0 635 339 B1

Fig. 3

Fig. 5

Fig. 4